(19) Europäisches Patentamt

European Patent Office

Office européen des brevets

(11) **EP 2 080 192 B1**

(12) **EUROPEAN PATENT SPECIFICATION**

(45) Date of publication and mention
of the grant of the patent:
**03.04.2019 Bulletin 2019/14**

(21) Application number: **06806264.5**

(22) Date of filing: **13.10.2006**

(51) Int Cl.:
***G10K 11/162*** *(2006.01)*

(86) International application number:
**PCT/EP2006/009917**

(87) International publication number:
**WO 2008/043385 (17.04.2008 Gazette 2008/16)**

(54) **ACOUSTIC ABSORBING MEMBER WITH OPEN AND CLOSED PORES**

AKUSTISCHES ABSORBTIONSGLIED MIT OFFENEN UND GESCHLOSSENEN POREN

ÉLÉMENT D'ABSORPTION ACOUSTIQUE À PORES OUVERTS ET FERMÉS

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**22.07.2009 Bulletin 2009/30**

(73) Proprietor: **Henkel AG & Co. KGaA
40589 Düsseldorf (DE)**

(72) Inventors:
• **WOJTOWICKI, Jean-Luc
58150 Pouilly sur Loire (FR)**
• **BELLE, Philippe
18300 Bannay (FR)**
• **PEGET, Sébastien
18300 Saint Bouize (FR)**
• **LANGLOIS, Stéphane
58150 Saint Martin sur Nohain (FR)**

(56) References cited:
**WO-A-02/26549       JP-A- 2006 110 982
US-A- 5 506 025       US-A- 6 093 358**

EP 2 080 192 B1

**Description**

The present invention concerns an acoustic absorbing member with different types of pores. It may be used to fill cavities or hollow sections in vehicles in order to absorb noise within these cavities or hollows sections.

Modern vehicle concepts and structural designs of vehicles have a plurality of cavities which have to be sealed in order to prevent the ingress of moisture and contaminants, since the latter can result in corrosion from the inside on the corresponding body parts. This applies, in particular, to modern self-supporting body constructions in which a heavy frame construction is replaced by so-called "space frames". With the latter, use is made of a lightweight, structurally solid chassis made of prefabricated hollow sections. Such constructions have, depending upon the specific system, a number of cavities which have to be sealed against the penetration of moisture and contaminants. These cavities include the upwardly extending A-, B- and C-pillars supporting the roof structure, the roof rail, portions of the fenders, or the sill. In addition, these cavities transmit airborne sound in the form of unpleasant vehicle running noises and wind noises, therefore such sealing measures also serve to reduce the noises and therefore to enhance the comfort of travelling in the vehicle. During the assembly of the car, these frame parts and body parts containing cavities are prefabricated from half-shell components which were joined at a later time by welding and/or adhesive bonding so as to form the closed hollow section. With such a type of construction the cavity in the early body in white ("body shop") state of a vehicle body is accordingly easily accessible, so that sealing and acoustically damping baffle parts (sometimes referred to as "pillar fillers" or "cavity filler inserts") can be fixed in this early phase of body construction by mechanical hanging, by insertion into appropriate holding devices, bores or by welding to the cavity walls.

Most modern baffles are designed to include a sealing material disposed on a support member or carrier. The carrier is generally manufactured from a rigid material, such as hard plastic, such that its shape approximates the shape of the cavity to be sealed. The carrier/sealing material combination is configured such that the carrier is inserted into a cavity, and the sealing material creates an airtight seal between the carrier and the walls of the cavity. Typically, the sealing material is activated (thermally or chemically) after insertion into the cavity so that the sealing material forms a seal with the walls of the cavity.

From WO 99/37506 a cavity sealing article is known which comprises a planar support member and a sealing member comprising a foamable polymer which surrounds in an intimate contact the support member and which is in plane with the support member. The foamable polymer comprises at least two layers which are in intimate contact and which are in the plane of the support member. The outer most layer of the sealing member comprises an uncross linked foamable polymer and the inner layer comprises a cross linked foamable polymer.

JP 2006 110982 A discloses an expansion-molded article with a sound absorbing body consisting of numerous foam cells obtained by heating and expanding foamable resin particles filled in a mold made up in a prescribed shape. Neighboring foam cells are combined with each other by softening and melting themselves at a contacting face.

WO 00/03894 A1 discloses a lightweight expandable baffle for sealing a cavity of a vehicle body at a predetermined cross section of the cavity. This baffle includes a rigid support plate having an outer periphery with a shape generally corresponding to but smaller than the shape of the cross section of the cavity. Said baffle comprises a heat expandable sealing material mounted to the outer periphery of the rigid support plate having an activation temperature range at which the material expands. The support plate is being formed of a material having a higher melting point than the activation temperature range of the sealing material. When activated, the sealing material expands radially from the rigid support plate to fill the cross-sectional cavity between the rigid support plate and the cavity walls.

US 6820923 discloses a specially designed automotive vehicle sound absorption system. An expandable material, such as a polymer-based foam, is disposed on a surface of a wall in a more or less regular pattern of nodes. Upon activation, the foam transforms, preferably during an automobile assembly operation, and remains bonded to surface for sound absorption. After foaming, pores may remain between the foamed nodes. The individual nodes of the foamable material are fixed directly on a wall of a vehicle. No carrier structure is used to carry and insert the foamable material.

US 6615951 concerns an absorbent material, consisting of a porous matter with open porosity, which comprises a plurality of perforations with varied transverse cross-section positioned at an angle relative to a specific dimension of the material, thereby providing additional porosity to the material. This additional porosity is in the range from 10 to 30 % which leads to an additional acoustic absorption effect. No lattice-like carrier structure is used to support the acoustic foam.

US 5506025 relates to an expandable baffle apparatus for sealing a cavity of an automobile or the like which includes a piece of heat expandable sealing material that is formed in a shape corresponding a shape of a cross section of the cavity to be sealed. A lattice-like support element supports the piece of sealing material at the predetermined cross section.

There are two mechanisms to lower the airborne sound in care body cavities: stop the sound propagation using, for example, pillar fillers and / or absorb the sound using sound absorbing materials like expanded foams.

Good sound absorbing foams usually have a certain amount of open cells in their structure, as explicitly stated in the quoted document US 6615951. However this kind of material can absorb water and keep humidity inside the cavities. This may lead to corrosion problems and is, therefore not accepted by many automobile manufactures. On the other hand, the foam used for pillar fillers are closed cell foams which do not keep the water, but which have poor sound absorbing properties.

It is the objective of the present invention to improve the sound absorbing properties of foamed structures like pillar fillers based on closed cell foams.

To solve this problem, a structure is provided which comprises nodules (= more or less irregularly shaped bodies or pieces) of a closed cell foam, whereby these nodules touch one another in a way to form macroscopic pores between these nodules.

Thus, it is one aspect of the present invention to provide an uncured acoustic absorbing member comprising a thermally inert carrier lattice comprising walls and cells between the walls defining an open lattice area, the inner wall surface of the cells being at least partly covered with a layer of an uncured thermally expandable material which cures and expands by foaming when heated to a temperature in the range of 140 to 200 °C to form nodules of a cured closed cell foam, characterized in that:

a) the expansion ratio E of the thermally expandable material on heating, and
b) the ratio of the open lattice area and the thickness of the layer of the uncured thermally expandable material

are selected in such a way that, after foaming, the nodules come partly into contact with one another forming an arrangement of open pores between the nodules, wherein the area ratio, measured in a planar cross section perpendicular or parallel to the walls of the carrier lattice, of the open pores to the total area covered by the open pores and the nodules of the cured closed cell foam is in the range of 2 to 50 %.

Herein, the term "thermally inert carrier lattice" means a lattice made of a material which does not melt or deform in another way at the maximum curing temperature of 200 °C. The carrier may be formed from metal or preferably from thermoplastics, in which case the thermoplastics may optionally be fibre-reinforced. Preferred thermoplastics are polyamides, polyimides, polyoxypropylene or polyethylene terephthalate. The thermoplast should have a melting point higher than the expansion temperature of the thermally expandable material.

The thermally expandable material can be made, for example, from ethylene/vinylacetate copolymers (EVA), copolymers of ethylene with (meth)acrylate esters, which optionally also contain (meth)acrylic acid incorporated proportionately by polymerization, random copolymers or block copolymers of styrene with butadiene or isoprene or the hydrogenation products thereof. The latter may also be tri-block copolymers of the SBS, SIS type or the hydrogenation products thereof SEBS or SEPS. In addition, the polymer compositions may also contain cross-linking agents, coupling agents, plasticizers as well as further auxiliary substances and additives. With a view to achieving a sufficient foaming capacity and expandability, these polymer compositions may also contain blowing agents. Suitable, in principle, by way of blowing agents are all known blowing agents such as, for example, the "chemical blowing agents" which release gases as a result of decomposition or "physical blowing agents", i.e. expanding hollow beads. Examples of the first-mentioned blowing agents are azobisisobutyronitrile, azodicarbonamide, dinitrosopentamethylenetetramine, 4,4'-oxy-bis(benzenesulfonic acid hydrazide), diphenylsulfone-3,3'-disulfohydrazide, benzene-1,3-disulfohydrazide, p-toluenesufonyl-semicarbazide. Examples of the physical blowing agents are expandable plastic hollow microbeads based on polyvinylidene-chloride copolymers or acrylonitrile/(meth)acrylate copolymers, such as are commercially available, for example, under the names "Dualite™" and "Expancel™" from Pierce & Stevens and Casco Nobel, respectively. Preferably, the heat expandable material has an activation temperature below 200°C.

Additional thermally expandable materials which form acoustic absorbing foams after expansion and curing are known in the state of the art. Examples can be found in the documents quoted in the introduction. Such materials are available, for example, from the present applicant under the trade mark of "Terophon™".

For example, a suitable material comprises, in % by weight:

| | |
|---|---|
| 8 to 15 % | of butyl rubber, |
| 20 to 40 % | of polyolefins, preferably selected from polyisobutylene, polybutene, or mixtures thereof, |
| 10 to 15 % | of aliphatic hydrocarbon resin, |
| 2 to 10 % | of formaldehyde resin, |

the remainder to 100 % being fillers selected from, for example, barium sulphate, calcium oxide, calcium carbonate, muscovite, quarz, and carbon black

Alternatively, the sound damping material may comprise, in % by weight:

| | |
|---|---|
| 40 to 70 % | of polyolefins, preferably selected from polyisobutylene, polybutene, or mixtures thereof, |

the remainder to 100 % being fillers selected from, for example, barium sulphate, calcium oxide, calcium carbonate, muscovite, quarz, and carbon black

Furthermore, the sound damping materials described in the working examples of EP 697277 or EP 617098 may be used for the present invention.

To make these materials foamable physical or chemical foaming agents (as mentioned here before) have to be added to the composition described above.

Generally speaking, the absorption of a closed cell material is controlled by the resonances of its skeleton. Typically, the first absorption peak will appear at the frequency of the compression wave in the material. The height of this peak is controlled by the damping of the material. Theoretically, for each modulus there is an optimum value of damping to obtain 100% of sound absorption at this frequency. In practice, 100 % of sound absorption is not reached. Yet, the best materials to be used in the present invention are the ones having the highest absorption at the first absorption peak in direction of increasing frequency. Foams showing this property are relatively "soft".

An example of such a soft material which can be used as the foamable material for the present invention comprises: styrene butadiene rubber (20-25% styrene), aliphatic hydrocarbon resin, fillers, blowing agents, and, preferably, an activator for the blowing agent, e.g. urea. The fillers may be selected from one ore more of: magnesium silicate hydrate, zinc oxide, clay, limestone, carbon black. Adjuvants like wax, fatty acids, e.g. stearic acid, solvents, substituted thiuram disulfide may also be present. Solvents may comprise, e.g., aliphatic oils, naphthenic oils, hydrotreated naphthenic distillates.

They main components may be present, in % by weight relative to the complete unfoamed composition, in the following ranges :

15 to 30 % styrene butadiene rubber (20-25% styrene),
25 - 40 % aliphatic hydrocarbon resin (tackifier),
2 - 6 % blowing agent(s),
2 to 6 % clay treated wax,

the remainder to 100 % being selected from fillers, activators for the blowing agents, solvents, and other adjuvants. Preferably, the composition contains from 20 to 40 % fillers. Solvents like aliphatic oils, naphthenic oils, hydrotreated naphthenic distillates may be present in the range of from 5 to 15 %.

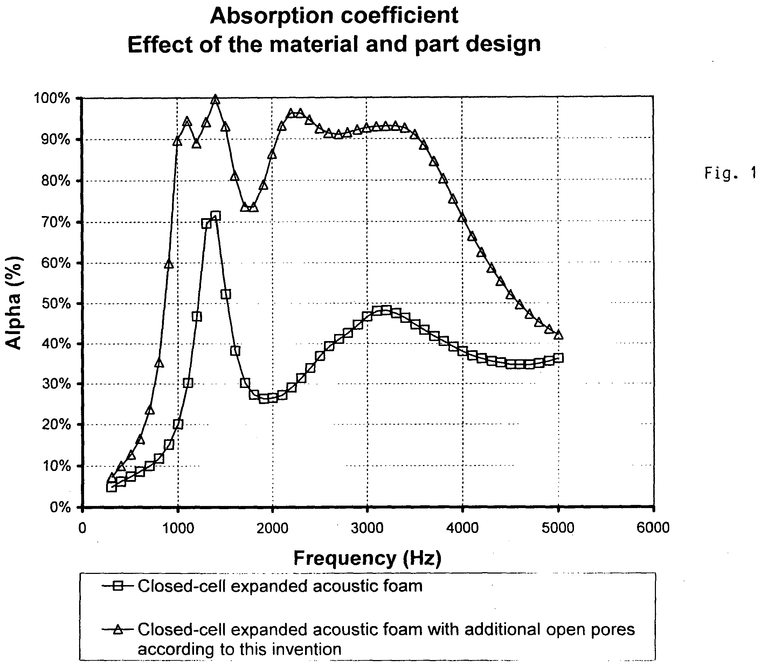

The acoustic absorbing behavior of such a material when foamed is given by the lower curve (designated by squares) of figure 1.

The cells formed by the walls of the thermally inert carrier lattice preferably form a repeated pattern. For example, the walls can be arranged in a way that the cells have, seen in a plane perpendicular to the walls, the shape of a triangle, a quadrangle, or a hexagon. Preferably, the lattice consists of two sets of parallel walls intersecting at right angles. Thus, the cells in this lattice are preferably rectangular and especially square if seen in a plane perpendicular to the walls.

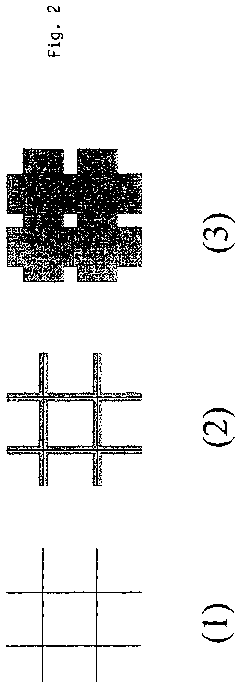

One embodiment of such an arrangement is depicted schematically in figure 2. Part (1) of this figure shows a section of the walls of the thermally inert carrier lattice projected onto a plane perpendicular to the walls. In part (2) of the figure, these walls are covered with a layer of the uncured thermally expandable material (shaded area). Part (3) of this figure shows schematically the resulting structure after the expansion of the thermally expandable material to form a closed cell foam. The shaded area represents, in a schematic way, a cross section through the bulk "nodules" in a plane perpendicular to walls. Within the resulting foam structure, open sections remain which have not been filled by the expanded foam.

Section (3) of figure 2 also explains how the area ratio as defined in claim 1 may be measured: the foam structure is cut along a plane parallel or, as in figure 2, perpendicular to the walls. The total area of the cross section, covered or not by the closed cell foam, is measured. This is the total area covered by the open pores and the nodules of the cured closed cell foam. The free area not covered by closed cell foam is the area of the open pores. The area ratio of the open pores to the total area should be in the range of 2 to 50 %, preferably in the range of 5 to 40 % and more preferably in the range of 10 to 20 %.

Thus, the principle of the present invention can be described quite simply: The expandable material is placed on the walls of the lattice structure made out of a heat insensitive material. While the car body in which this member has been inserted is in the oven, the heat reactive material expands in a manner that the whole volume of each of the cells is not fully filled. The remaining unfilled volume (or surface, if seen in a planar cross section) forms the open pores.

The quantity of uncured material to be applied may be calculated according to the following parameters:

1. The size of the lattice cells
2. The expansion ratio of the expandable material on foaming
3. The open area to be obtained

For example, if we think in two dimensions, if the lattice dimension is d, assuming a 3D volumetric expansion ratio E(%) and a open area ratio *R(%)*, the amount of material $S_{mat}$ can be calculated as follow:

$$\text{Total surface of lattice } S_{latt} = d \times d$$

$$\text{Surface of perforation (open pores) } S_{perf} = (R/100) \times S_{latt}$$

$$S_{mat} = \frac{S_{perf}}{(\sqrt[3]{(1 + E/100)})^2}$$

The expansion ratio E can be adjusted in a wide range, as known in the art, by selecting the type and the amount of the foaming agent. The expansion ratio may be measured by comparing the bulk densities of the unfoamed and foamed material.

Figure 2 shows one possible embodiment of the present invention: The walls of the cells of the carrier lattice are covered completely with a layer of the uncured thermally expandable material. In this case, for a given expansion ratio of the thermally expandable material, the size of the cells and the thickness of the uncured thermally expandable material have to be adjusted in a way that, after expansion, the available volume is not filled completely with the cured foam, but that open pores remain, as seen in section (3) of figure 2.

Other embodiments leading to essentially the same result after foaming are possible. For example, the walls of the cells could only partly be covered by the uncured thermally expandable material, leaving some of the walls uncovered. It is only necessary that, on an average, the cells of the carrier lattice contain such an amount of the foamable material of a selected expansion ratio that the described structure after foaming is obtained: nodules of foamed material which come partly into contact with one another forming an arrangement of open pores between the nodules. Of course, the required amount of foamable material per cell depends on the expansion ratio of the material on one hand and the size of the cells on the other hand, and can be adjusted accordingly.

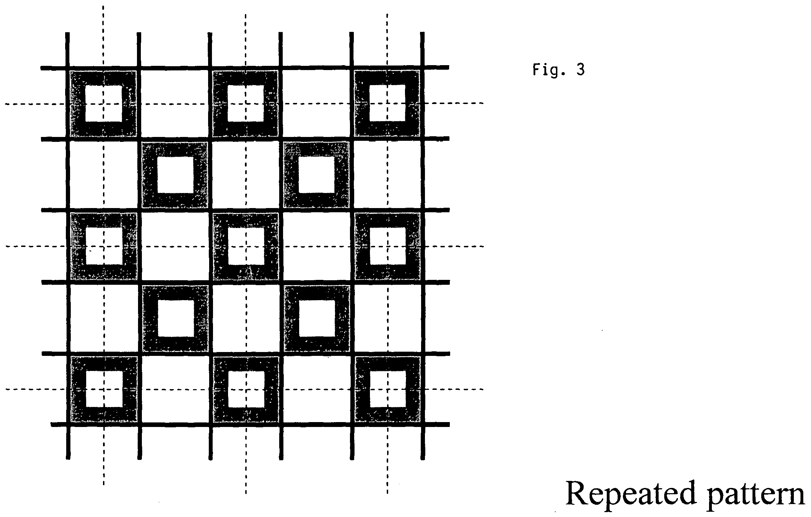

In a preferred embodiment, the cells the walls of which are partly covered by the uncured thermally expandable material form a repeated pattern. This means, that the same arrangement of foamable material partly covering the walls of the cells is repeated in two dimensions until the edges of the acoustic absorbing member are reached. This repeated pattern in the unfoamed state results in a more or less repeated pattern of foam nodules (or, generally speaking, spaces filled with foam), and empty spaces (pores) between the foam nodules. One special embodiment of this is depicted in figure 3. In this case, all the walls of a selected first cell are covered by a layer of the uncured thermally expandable material, whereas all the walls of the adjacent cells which share common walls with the selected first open cell are not covered by a layer of the uncured thermally expandable material, and wherein the cells the walls of which are covered by the uncured thermally expandable material and the cells the walls of which are not covered by the uncured thermally expandable material form a repeated pattern.

Figure 3 shows the special features of filled and empty square cells foaming a repeated pattern. As explained above, square cells are a preferred, but not the only possible embodiment of the invention. For example, cells foaming an analogous pattern to that of figure 3 could be triangular, quadrangular (e.g. rectangular)or hexagonal. Other shapes of the cells also resulting in a repeated pattern are conceivable, for example cells in the shape of the trapezium.

The pattern illustrated in figure 3, where cells carrying the uncured thermally expandable materials alternate with empty cells, can also be characterized by stating that cells sharing common corners in directions diagonal to the cell walls are either all empty or have all the walls covered by the uncured thermally expandable material.

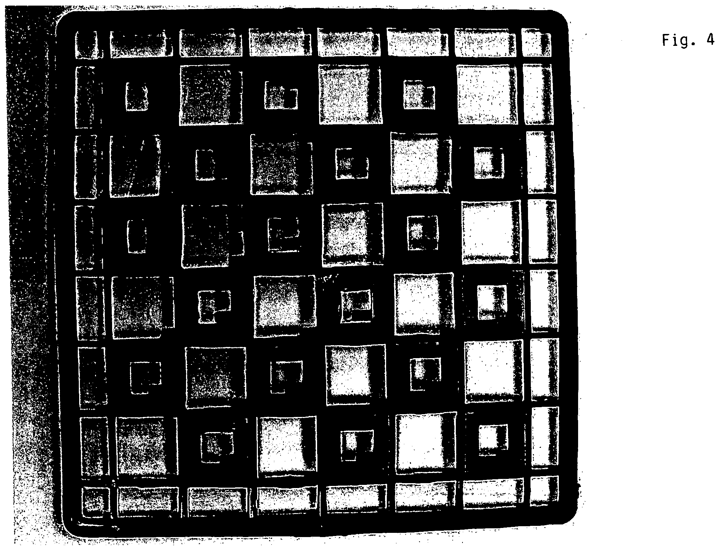

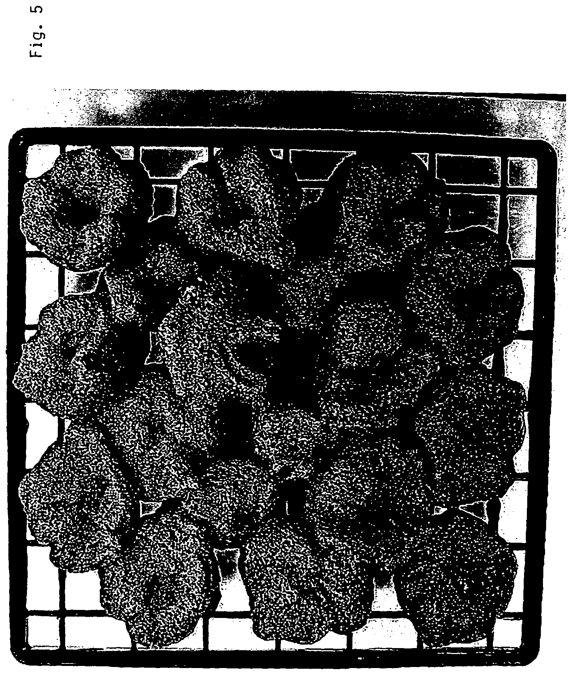

The alternate arrangement of covered and empty cells illustrated by figure 3 and described above leads, after foaming, to a preferred arrangement of nodules (space filled with foam) and empty pores between the nodules: the presence of empty cells results in larger pores between the foam nodules, whereas the smaller empty volume within the cells the walls of which are covered by the foamable material may lead to additional smaller pores between the foam nodules. Thus pores of different size are formed after foaming resulting in especially pronounced acoustic absorbing properties. This is illustrated in the photographs of figures 4 and 5. Figure 4 shows a photograph of an uncured acoustic absorbing member as described above, figure 5 shows the same member after foaming. Pores of different size are clearly visible.

A second aspect of the present invention relates to a method of obtaining an acoustic absorbing member according to claim 9.

Figure 5 illustrates an acoustic absorbing member obtained by heating the uncured acoustic absorbing member as described above to a temperature in the range of 140 to 200 °C for a time long enough so that the expansion of the thermally expandable material is completed to at least 90 % of the possible total expansion. In practice, the time for heating, the heating rate and the final temperature reached are not variables which can be freely chosen. Instead, these variables are fixed by the curing conditions for the first paint layer on the part in which the acoustic absorbing member has been placed. For a car body for example, the first paint layer usually is an e-coat which is hardened in the e-coat oven. Thus, the foaming and curing properties of the thermally expandable material have to be selected in a way that at least 90 %, preferably at least 95 % and, more preferably, practically 100 % of the possible total expansion is reached under the curing conditions in the e-coat oven.

In a more general way, the acoustic absorbing member after foaming can be described as an acoustic absorbing member comprising a thermally inert carrier lattice comprising walls embedded within nodules of a cured closed cell foam, the nodules coming partly into contact with one another forming an arrangement of open pores between the nodules, wherein the area ratio, measured in a planar cross section perpendicular or parallel to the walls of the carrier lattice, of the open pores to the total area covered by the open pores and the nodules of the cured closed cell foam is in the range of 2 to 50 %, preferably in the range of 5 to 40 %, and especially in the range of 10 to 20 %.

In a preferred embodiment, the cured closed cell foam the acoustic absorbing member described above has a sound absorption $\alpha$ at the first absorption peak in the direction of increasing frequency of at least 30 %. More preferably, the cured cell foam has a sound absorption of at least 40 %, more preferably at least 50 % or even at least 60%. An example of such a material is given below.

The present invention also includes a technically advantageous method according to claim 12 to manufacture the uncured acoustic absorbing member of the present invention. The method comprises the steps of:

i) providing a thermally inert carrier lattice comprising walls and cells between the walls,
ii) covering at least some of the walls with a layer of the uncured thermally expandable material by injection molding the layer of the uncured thermally expandable material onto at least some of the walls of the thermally inert carrier lattice.

The carrier lattice could be made of any material which is thermally inert at the foaming temperature, i.e. it does not melt or soften or decompose at this temperature. For example, the carrier lattice could be metallic. However, for weight reasons, it is preferred that the carrier lattice is a polymeric material. Examples of suitable materials have been given above.

In the method of manufacture of the present invention it is especially preferred that the thermally inert carrier lattice is provided in step i) by injection molding of the material which forms the thermally inert carrier lattice using the same injection press as used for step ii) as described before.

In this embodiment, the complete acoustic absorbing member is manufactured in two steps using the same injection molding apparatus. This can be done, for example, using two separate screws for the subsequent injection molding of the two different materials.

The thermally inert lattice may comprise organic polymers.

The acoustic measurements and the photographs described herein have been obtained with the acoustic absorbing member shown schematically in figure 3 and as the real part in figure 4. These parts have been obtained by the two step injection molding process described above. Thermally inert carrier materials which are known in the art of producing reinforcing or acoustic absorbing parts can be used for the present invention. Examples have been mentioned above, and can be found in the references cited in the introduction.

The thermally expandable material used for the measurement described herein had the following composition:

22.6 % Styrene butadiene rubber (20-25% styrene)
31.85 % aliphatic hydrocarbon resin (tackifier)
14.1% magnesium silicate hydrate
3.5% zinc oxide
3.5% clay treated wax
0.4% stearic acid
0.4% urea (activator for blowing agent and accelerator)
7.1% limestone
7.1% hydrotreated naphthenic distillate
2.7% azodicarbonamide modified (blowing agent)
1.35% p,p'oxybis(benzenesulfonylhydrazide): blowing agent
0.7% tetramethyl thiuram disulfide
1.9 % naphthenic oil
2.8 % carbon black

Figure 1 shows a comparison of the absorption behavior of the closed cell expanded acoustic foam after foaming and curing the thermally expandable material described before. The lower curve (squares) shows the absorption coefficient of the bulk expanded acoustic foam as such. The upper curve (triangles) shows the improved absorption behavior of the complete foamed acoustic absorbing member of the present invention, i.e. the lattice structure with the foamed acoustic foam forming nodules and including open pores between the modules, as illustrated in figure 5.

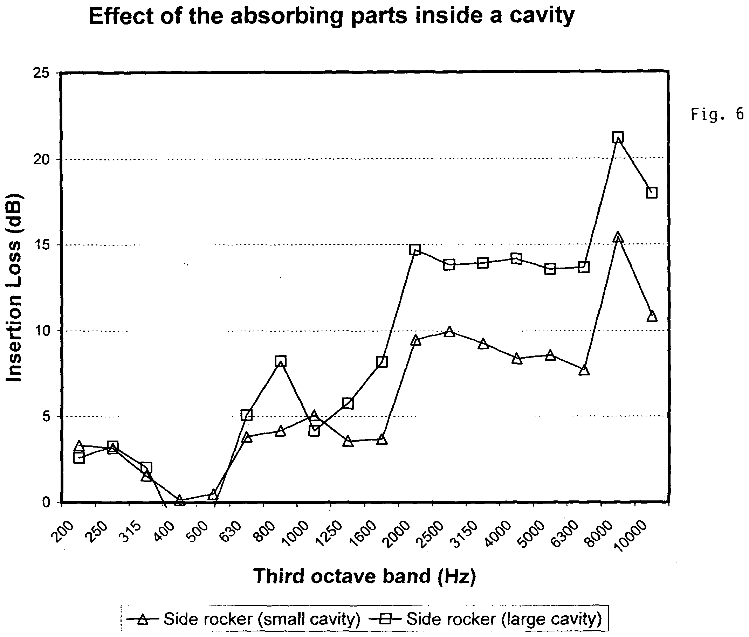

In an experiment simulating practical application, uncured acoustic absorbing members with the chemical composition as described above have been inserted into different cavities of a car body (side rocker) of a car, and cured. The acoustic effect of the cured absorbing parts according to the invention inside these cavities is shown in figure 6.

Thus, the present invention solves the problem described above. Closed cell foams which are preferred for corrosion resistance reason, but less preferred for acoustic absorption behavior, can be used for acoustic purposes and show pronounced acoustic absorption behavior if arranged on a carrier lattice in a way as described above. Prominent acoustic absorption properties after foaming can be reached without the disadvantages of open cell foams.

Figure captions

Fig 1: Comparison of the acoustic absorption behavior (absorption coefficient $\alpha$ as a function of frequency) of bulk closed cell expanded acoustic foam, and the same acoustic foam with additional open pores according to the invention.

Fig 2: Schematic drawing of one embodiment of the invention:

Section (1): projection of the walls of a square carrier lattice onto a plane perpendicular to the walls;
Section (2): The walls of the carrier lattice of Section (1) completely covered with the thermally expandable material before foaming (shaded area);
Section (3): Schematic projection of the arrangement of Section (2) after foaming: Shaded area: expanded closed cell foam ("nodules") leaving open pores (white area) in between.

Fig. 3: A further embodiment of the present invention before foaming: Dark lines = walls of the carrier lattice seen in projection onto a plane perpendicular to the walls; shaded areas = layers of thermally expandable material within each second cell.

Fig. 4: Photograph of a real part corresponding to Fig. 3 before foaming. Lattice spacing: 22 mm, thickness of the layers of thermally expandable material: 5 mm

Fig. 5: Same part as in Fig. 4 after foaming.

Fig 6: Acoustic effect (insertion loss in dB as a function of frequency) of foamed acoustic absorbing members of the present invention (in the embodiment according to Figs. 3 to 5) inserted into cavities of a real car.

**Claims**

1.  An uncured acoustic absorbing member comprising a thermally inert carrier lattice comprising walls and cells between the walls defining an open lattice area, **characterized in that** the inner wall surface of the cells is at least partly covered with a layer of an uncured thermally expandable material which cures and expands by foaming when heated to a temperature in the range of 140 to 200 °C to form nodules of a cured closed cell foam, wherein:

    a) the expansion ratio E of the thermally expandable material on heating, and
    b) the ratio of the open lattice area and the thickness of the layer of the uncured thermally expandable material

    are selected in such a way that, after foaming, the nodules come partly into contact with one another forming an arrangement of open pores between the nodules, wherein the area ratio, measured in a planar cross section perpendicular or parallel to the walls of the carrier lattice, of the open pores to the total area covered by the open pores and the nodules of the cured closed cell foam is in the range of 2 to 50 %.

2.  The uncured acoustic absorbing member of claim 1 wherein substantially all the walls of the cells are covered with a layer of the uncured thermally expandable material.

3. The uncured acoustic absorbing member of claim 1 wherein the walls of the cells are partly covered by the uncured thermally expandable material.

4. The uncured acoustic absorbing member of claim 3, wherein the cells the walls of which are partly covered by the uncured thermally expandable material form a repeated pattern.

5. The uncured acoustic absorbing member of one ore more of claims 3 and 4 wherein all the walls of a selected first cell are covered by a layer of the uncured thermally expandable material, whereas all the walls of the adjacent cells which share common walls with the selected first open cell are not covered by a layer of the uncured thermally expandable material, and wherein the cells the walls of which are covered by the uncured thermally expandable material and the cells the walls of which are not covered by the uncured thermally expandable material form a repeated pattern.

6. The uncured acoustic absorbing member of claim 5 wherein cells sharing common corners in directions diagonal to the walls of the cells are either all empty or have all their walls covered by the uncured thermally expandable material.

7. The uncured acoustic absorbing member of any of the preceding claims, wherein the uncured thermally expandable material comprises, in % by weight relative to the complete thermally expandable material:

    15 to 30 % styrene butadiene rubber (20-25% styrene),
    25 - 40 % aliphatic hydrocarbon resin,
    2 - 6 % blowing agent(s).

8. The uncured acoustic absorbing member of claim 7, wherein the uncured thermally expandable material additionally comprises, in % by weight relative to the complete thermally expandable material: from 20 to 40 % fillers and 5 to 15 % solvents.

9. Method of obtaining an acoustic absorbing member by heating the uncured acoustic absorbing member of one or more of claims 1 to 8 to a temperature in the range of 140 to 200 °C for a time long enough so that the expansion of the thermally expandable material is completed to at least 90 % of the possible total expansion.

10. Method of obtaining an acoustic absorbing member according to claim 9, wherein the acoustic absorbing member comprises a thermally inert carrier lattice comprising walls embedded within nodules of a cured closed cell foam, the nodules coming partly into contact with one another forming an arrangement of open pores between the nodules, wherein the area ratio, measured in a planar cross section perpendicular or parallel to the walls of the carrier lattice, of the open pores to the total area covered by the open pores and the nodules of the cured closed cell foam is in the range of 2 to 50 %.

11. Method of obtaining an acoustic absorbing member of claim 9 or 10 wherein the cured closed cell foam has a sound absorption $\alpha$ at the first absorption peak in the direction of increasing frequency of at least 30 %.

12. A method to manufacture an uncured acoustic absorbing member according to one or more of claims 1 to 8 comprising:

    i) providing a thermally inert carrier lattice comprising walls and cells between the walls,
    ii) covering at least some of the inner wall surfaces of the cells with a layer of the uncured thermally expandable material by injection molding the layer of the uncured thermally expandable material onto at least some of the walls of the thermally inert carrier lattice.

13. The method of claim 12 wherein the thermally inert carrier lattice is provided in step i) by injection molding of the material which forms the thermally inert carrier lattice using the same injection press as used for step ii).

**Patentansprüche**

1. Ungehärtetes akustisches Absorptionselement, das ein thermisch inertes Trägergitter umfasst, das Wände und Zellen zwischen den Wänden umfasst, die einen offenen Gitterbereich definieren, **dadurch gekennzeichnet, dass** die innere Wandoberfläche der Zellen zumindest teilweise mit einer Schicht aus einem ungehärteten thermisch dehnbaren Material bedeckt ist, das sich durch Schäumen härtet und ausdehnt, wenn es auf eine Temperatur im Bereich von 140 bis 200 °C erwärmt wird, um Knötchen aus einem gehärteten Schaum mit geschlossenen Zellen zu bilden, wobei:

   a) das Dehnungsverhältnis E des thermisch dehnbaren Materials auf Erwärmung, und
   b) das Verhältnis des offenen Gitterbereichs und die Dicke der Schicht des ungehärteten thermisch dehnbaren Materials
   derart ausgewählt sind, dass, nach dem Schäumen, die Knötchen teilweise miteinander in Kontakt kommen, um eine Anordnung von offenen Poren zwischen den Knötchen zu bilden, wobei das Bereichsverhältnis, gemessen in einem planen Querschnitt rechtwinklig oder parallel zu den Wänden den Trägergitters, der offenen Poren zum von dem offenen Poren und den Knötchen des gehärteten Schaums mit geschlossenen Zellen bedeckten Gesamtbereich im Bereich von 2 bis 50 % liegt.

2. Ungehärtetes akustisches Absorptionselement nach Anspruch 1, wobei im Wesentlichen alle Wände der Zellen mit einer Schicht des ungehärteten thermisch dehnbaren Materials bedeckt sind.

3. Ungehärtetes akustisches Absorptionselement nach Anspruch 1, wobei die Wände der Zellen teilweise mit dem ungehärteten thermisch dehnbaren Material bedeckt sind.

4. Ungehärtetes akustisches Absorptionselement nach Anspruch 3, wobei die Zellen, deren Wände teilweise mit dem ungehärteten thermisch dehnbaren Material bedeckt sind, ein wiederholtes Muster bilden.

5. Ungehärtetes akustisches Absorptionselement nach einem oder mehreren der Ansprüche 3 und 4, wobei die Wände einer ausgewählten ersten Zelle mit einer Schicht des ungehärteten thermisch dehnbaren Materials bedeckt sind, wohingegen all die Wände der anliegenden Zellen, die mit der ausgewählten ersten offenen Zelle gemeinsame Wände teilen, nicht durch eine Schicht des ungehärteten thermisch dehnbaren Materials bedeckt sind, und wobei die Zellen deren Wände nicht mit dem ungehärteten thermisch dehnbaren Material bedeckt sind, ein wiederholtes Muster bilden.

6. Ungehärtetes akustisches Absorptionselement nach Anspruch 5, wobei Zellen, die gemeinsame Ecken in diagonalen Richtungen zu den Wänden der Zellen teilen, entweder alle leer sind oder alle ihre Wände mit dem ungehärteten thermisch dehnbaren Material bedeckt sind.

7. Ungehärtetes akustisches Absorptionselement nach einem der vorstehenden Ansprüche, wobei das ungehärtete thermisch dehnbare Material Folgendes in Gew.-% relativ zum fertigen thermisch dehnbaren Material, umfasst:

   15 bis 30 % Styrolbutadienkautschuk (20-25 % Styrol),
   25 bis 40 % aliphatisches Kohlenwasserstoffharz,
   2 bis 6 % Schaumbildner.

8. Ungehärtetes akustisches Absorptionselement nach Anspruch 7, wobei das ungehärtete thermisch dehnbare Material zusätzlich Folgendes in Gew.-% relativ zum fertigen thermisch dehnbaren Material, umfasst: 20 bis 40 % Füllstoffe und 5 bis 15 % Lösungsmittel.

9. Verfahren zum Erhalten eines akustisch absorbierenden Elementes durch das Erwärmen des ungehärteten akustischen absorbierenden Elementes nach einem oder mehreren der Ansprüche 1 bis 8 auf eine Temperatur im Bereich von 140 bis 200 °C für eine ausreichend lange Zeit, so, dass die Ausdehnung des thermisch dehnbaren Materials auf mindestens 90 % der möglichen Gesamtexpansion vervollständigt wird.

10. Verfahren zum Erhalten eines akustischen Elementes nach Anspruch 9, wobei das akustische absorbierende Element ein thermisch inertes Trägergerüst umfasst, das Wände umfasst, die innerhalb von Knötchen eines gehärteten Schaums mit geschlossenen Zellen eingebettet ist, wobei die Knötchen teilweise miteinander in Kontakt kommen und eine Anordnung von offenen Poren zwischen den Knötchen bilden, wobei das Bereichsverhältnis, gemessen in einem planen Querschnitt rechtwinklig oder parallel zu den Wänden den Trägergitters, der offenen Poren zum von dem offenen Poren und den Knötchen des gehärteten Schaums mit geschlossenen Zellen bedeckten Gesamtbereich im Bereich von 2 bis 50 % liegt.

11. Verfahren zum Erhalten eines akustischen Absorptionselementes nach Anspruch 9 oder 10, wobei der gehärtete Schaum mit geschlossenen Zellen eine Geräuschabsorption $\alpha$ an dem ersten Absorptionsspitzenwert in der Richtung der ansteigenden Frequenz von mindestens 30 % aufweist.

12. Verfahren zur Herstellung eines ungehärteten akustischen Absorptionselementes nach einem oder mehreren der Ansprüche 1 bis 8, umfassend:

i) Bereitstellung eines thermisch inerten Trägergitters umfassend Wände und Zellen zwischen den Wänden,
ii) Bedecken mindestens eines Teils der inneren Wandoberflächen der Zellen mit einer Schicht des ungehärteten thermisch dehnbaren Materials durch Spritzgießen der Schicht des ungehärteten thermisch dehnbaren Materials auf mindestens einige der Wände des thermisch inerten Trägergitters.

13. Verfahren nach Anspruch 12, wobei das thermisch inerte Trägergitter in Schritt i) durch Spritzgießen des Materials, das das thermisch inerte Trägergitter bildet unter Verwendung derselben Spritzgießmaschine wie derjenigen, die in Schritt ii) verwendet wurde, bereitgestellt wird.


## Revendications

1. Élément d'absorption acoustique non durci comprenant un réseau de support thermiquement inerte comprenant des parois et des cellules situées entre les parois définissant une zone de réseau ouverte, **caractérisé en ce que** la surface de paroi interne des cellules est au moins partiellement recouverte d'une couche d'un matériau thermiquement extensible non durci qui se durcit et s'étend par moussage lorsqu'il est chauffé à une température dans la plage de 140 à 200 °C pour former des nodules d'une mousse durcie à cellules fermées, dans lequel :

a) le taux d'expansion E du matériau thermiquement extensible après chauffage, et
b) le taux de la zone de réseau ouvert et l'épaisseur de la couche du matériau thermiquement extensible non durci sont sélectionnés de telle sorte que, après moussage, des modules viennent partiellement en contact les uns avec les autres formant un agencement de pores ouverts situés entre les nodules, le rapport de surface, mesuré dans une section transversale plane perpendiculaire ou parallèle aux parois du réseau de support, aux pores ouverts sur la surface totale recouverte par les pores ouverts et aux nodules de la mousse durcie à cellules fermées se situe dans la plage comprise entre 2 et 50 %.

2. Élément d'absorption acoustique non durci selon la revendication 1, dans lequel toutes les parois des cellules sont sensiblement recouvertes d'une couche du matériau thermiquement extensible non durci.

3. Élément d'absorption acoustique non durci selon la revendication 1, dans lequel les parois des cellules sont partiellement recouvertes du matériau thermiquement extensible non durci.

4. Élément d'absorption acoustique non durci selon la revendication 3, dans lequel les cellules dont les parois sont partiellement recouvertes du matériau thermiquement extensible non durci forment un motif répété.

5. Élément d'absorption acoustique non durci selon l'une quelconque des revendications 3 et 4, dans lequel toutes les parois d'une première cellule sélectionnée sont recouvertes d'une couche du matériau thermiquement extensible non durci, alors que toutes les parois des cellules adjacentes qui partagent des parois communes avec la première cellule ouverte sélectionnée ne sont pas recouvertes d'une couche du matériau thermiquement extensible non durci, et les cellules dont les parois sont recouvertes du matériau thermiquement extensible non durci et les cellules dont les parois ne sont pas recouvertes par le matériau thermiquement extensible non durci formant un motif répété.

6. Élément d'absorption acoustique non durci selon la revendication 5, dans lequel les cellules partageant des coins communs dans des directions diagonales aux parois des cellules sont soit toutes vides soit voient toutes leurs parois recouvertes du matériau thermiquement extensible non durci.

7. Élément d'absorption acoustique non durci selon l'une quelconque des revendications précédentes, dans lequel le matériau thermiquement extensible non durci comprend, en pourcentage massique par rapport à la totalité du matériau thermiquement extensible :

entre 15 et 30 % de caoutchouc de styrène et de butadiène (entre 20 et 25 % de styrène),
entre 25 et 40 % de résines d'hydrocarbures aliphatiques,
entre 2 et 6 % d'agent(s) d'expansion.

8. Élément d'absorption acoustique non durci selon la revendication 7, dans lequel le matériau thermiquement extensible non durci comprend en outre, en pourcentage massique par rapport à la totalité du matériau thermiquement extensible : entre 20 et 40 % de charges et entre 5 et 15 % de solvants.

9. Procédé d'obtention d'un élément d'absorption acoustique par chauffage de l'élément d'absorption acoustique non durci selon l'une quelconque des revendications 1 à 8 à une température se situant dans la plage de 140 à 200 °C pendant une durée suffisamment longue de sorte que l'expansion du matériau thermiquement extensible est terminée à au moins 90 % de l'expansion totale possible.

10. Procédé d'obtention d'un élément d'absorption acoustique selon la revendication 9, dans lequel l'élément d'absorption acoustique comprend un réseau de support thermiquement inerte comprenant des parois encastrées dans des nodules d'une mousse durcie à cellules fermées, les nodules viennent partiellement en contact les uns avec les autres formant un agencement de pores ouverts situés entre les nodules, le rapport de surface, mesuré dans une section transversale plane perpendiculaire ou parallèle aux parois du réseau de support, aux pores ouverts sur la surface totale recouverte par les pores ouverts et aux nodules de la mousse durcie à cellules fermées se situe dans la plage comprise entre 2 et 50 %.

11. Procédé d'obtention d'un élément d'absorption acoustique selon la revendication 9 ou 10, dans lequel la mousse durcie à cellules fermées a une absorption sonore $\alpha$ au premier pic d'absorption dans la direction de fréquence accrue d'au moins 30 %.

12. Procédé de fabrication d'un élément d'absorption acoustique non durci selon l'une quelconque des revendications 1 à 8, comprenant :

i) l'obtention d'un réseau de support thermiquement inerte comprenant des parois et des cellules entre les parois,
ii) le recouvrement d'au moins certaines des surfaces de parois intérieures des cellules par une couche du matériau thermiquement extensible non durci par moulage par injection de la couche du matériau thermiquement extensible non durci sur au moins certaines des parois du réseau de support thermiquement inerte.

13. Procédé selon la revendication 12, dans lequel le réseau de support thermiquement inerte est obtenu à l'étape i) par moulage par injection du matériau qui forme le réseau de support thermiquement inerte en utilisant la même presse d'injection utilisée pour l'étape ii).

Fig. 1

Absorption coefficient
Effect of the material and part design

—□— Closed-cell expanded acoustic foam

—△— Closed-cell expanded acoustic foam with additional open pores according to this invention

Fig. 2

(1)  (2)  (3)

Fig. 3

Repeated pattern

Fig. 4

Fig. 5

# Effect of the absorbing parts inside a cavity

Fig. 6

EP 2 080 192 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9937506 A
- JP 2006110982 A
- WO 0003894 A1
- US 6820923 B
- US 6615951 B
- US 5506025 A
- EP 697277 A
- EP 617098 A